# FASCICULE DE BREVET EUROPEEN

(11) **EP 3 110 661 B1**
(45) Date de publication et mention de la délivrance du brevet: **02.05.2018**
(21) Numéro de dépôt: 15706909.7
(22) Date de dépôt: 12.02.2015
(51) Int. Cl.: B60R 1/00, B62D 15/02

(54) **DISPOSITIF D'AIDE AU STATIONNEMENT À DÉTECTION D'ENTRÉE OU DE SORTIE DE ZONE DE STATIONNEMENT, POUR UN CONDUCTEUR DE VÉHICULE**
PARKHILFESYSTEMVORRICHTUNG ZUR ERKENNUNG DER EINFAHRT IN EINE ODER DER AUSFAHRT AUS EINER PARKZONE FÜR EINEN FAHRZEUGFÜHRER
PARKING ASSISTANCE DEVICE DETECTING ENTRY INTO OR EXIT FROM A PARKING ZONE, FOR A VEHICLE DRIVER

(30) Priorité: 21.02.2014 FR 1451375
(43) Date de publication de la demande: 04.01.2017
(73) Titulaire: PSA Automobiles SA, 78300 Poissy (FR)
(72) Inventeur: DUPERRAY, Delphine, F-92360 Meudon La Foret (FR); ETCHEVERRY, Celine, F-91370 Verrieres Le Buisson (FR); LAYERLE, Jean-Francois, F-94320 Thiais (FR)
(86) Numéro de dépôt international: PCT/FR2015/050348
(87) Numéro de publication internationale: WO 2015/124847

(56) Documents cités:
- EP-A1- 2 257 066
- EP-A1- 2 581 273
- US-A1- 2008 091 320

## Description

L'invention concerne les véhicules, éventuellement de type terrestre, et plus précisément les dispositifs qui sont destinés à aider les conducteurs pendant les phases de stationnement de leurs véhicules.

On entend ici par « phase de stationnement » aussi bien l'entrée dans une zone de stationnement que la sortie d'une zone de stationnement. Le document EP 2 257 066 A1 révèle un dispositif d'aide au stationnement pour un conducteur d'un véhicule, comprenant des moyens de contrôle agencés, lorsqu'une aide au stationnement est requise par ledit conducteur, pour déclencher un affichage sur un écran présent dans ledit véhicule d'une image représentative (i) soit d'au moins un type d'entrée dans au moins un type de zone de stationnement lorsqu'une vitesse en cours dudit véhicule est non nulle. Certains véhicules, généralement de type automobile, sont équipés d'un dispositif d'aide au stationnement chargé de contrôler les manoeuvres pendant les phases de stationnement, afin qu'ils puissent être garés sur une zone de stationnement ou sortis d'une zone de stationnement sans intervention de leur conducteur.

Lorsqu'un tel dispositif d'aide au stationnement est activé par un conducteur, il déclenche l'affichage sur un écran présent dans le véhicule d'une image qui est représentative de toutes les phases de stationnement qu'il peut effectivement contrôler, afin que le conducteur sélectionne celle qui est adaptée à la situation rencontrée. Le conducteur observe donc sur l'écran plusieurs imagettes représentant respectivement les entrées dans au moins deux types de zone de stationnement (choisis parmi une zone de stationnement en bataille, une zone de stationnement en créneau et une zone de stationnement en épi) et au moins une sortie d'au moins un type de zone de stationnement (choisi parmi la zone de stationnement en bataille, la zone de stationnement en créneau et la zone de stationnement en épi). Par conséquent, une partie des imagettes affichées ne correspond pas du tout à la phase de stationnement devant être contrôlée, ce qui complexifie inutilement la sélection.

De plus, les imagettes qui correspondent à un même type de zone de stationnement mais à des phases de stationnement différentes présentent peu de différence, et donc il peut arriver que le conducteur ne sélectionne pas celle qui est adaptée à la situation rencontrée. Dans ce cas, le conducteur doit annuler la sélection, reprendre le contrôle de son véhicule et recommencer intégralement depuis le début la procédure d'aide au stationnement, ce qui lui fait perdre du temps, et peut le pousser à ne plus utiliser la fonction d'aide au stationnement lorsqu'il lui est déjà arrivé à plusieurs reprises de se tromper.

On notera que cette sélection fait partie d'une procédure assez longue comprenant également l'activation de la fonction d'aide au stationnement, l'actionnement correct du clignotant pour signaler le bon côté du stationnement (ou de sortie de la zone de stationnement), le maintien de la vitesse du véhicule en-dessous d'un seuil prédéfini, et l'enclenchement de la marche arrière ou du neutre au bon moment, si bien qu'il est assez facile de se tromper lorsqu'on la réalise (en particulier si l'on est pressé, par exemple du fait que l'on gêne un tiers).

L'invention a donc notamment pour but d'améliorer la situation.

Elle propose notamment à cet effet un dispositif, destiné à aider un conducteur de véhicule pendant une phase de stationnement, et comprenant des moyens de contrôle agencés, lorsqu'une aide au stationnement est requise par le conducteur, pour déclencher un affichage sur un écran présent dans le véhicule d'une image représentative :
- (i) soit d'au moins un type d'entrée dans au moins un type de zone de stationnement lorsque la vitesse en cours du véhicule et au moins une vitesse du véhicule enregistrée précédemment sont non nulles,
- (ii) soit d'au moins un type de sortie d'au moins un type de zone de stationnement lorsque la vitesse en cours du véhicule et au moins une vitesse du véhicule enregistrée précédemment sont nulles,
- (iii) soit d'au moins un type d'entrée dans au moins un type de zone de stationnement et d'au moins un type de sortie d'au moins un type de zone de stationnement lorsqu'aucune des conditions associées aux alternatives (i) et (ii) n'est remplie.

On comprendra qu'ici une condition est remplie soit lorsqu'une vitesse en cours du véhicule et une vitesse du véhicule enregistrée précédemment sont non nulles, soit lorsqu'une vitesse en cours du véhicule et une vitesse du véhicule enregistrée précédemment sont nulles.

Le dispositif est ainsi capable de déterminer dans la plupart des situations si le véhicule est dans une phase d'entrée dans une zone de stationnement ou dans une phase de sortie d'une zone de stationnement, et donc de proposer au conducteur une image représentative exclusivement de la phase déterminée, et c'est seulement dans les situations non discriminables restantes qu'il proposera au conducteur une image représentative des deux phases non discriminées.

Le dispositif d'aide au stationnement selon l'invention peut comporter d'autres caractéristiques qui peuvent être prises séparément ou en combinaison, et notamment :
- ses moyens de contrôle peuvent être agencés, dès qu'une portière du véhicule est fermée, pour comparer la vitesse en cours du véhicule à une vitesse du véhicule enregistrée depuis cette fermeture, et pour enregistrer la plus grande des deux vitesses comparées pour l'utiliser dans les conditions ;
- chaque type de sortie peut correspondre à un type de zone de stationnement qui est choisi parmi au moins une zone de stationnement en bataille, une zone de stationnement en créneau, et une zone de stationnement en épi ;
- chaque type d'entrée peut correspondre à un type de zone de stationnement qui est choisi parmi au moins une zone de stationnement en bataille, une zone de stationnement en créneau, et une zone de stationnement en épi ;
- il peut également comprendre des moyens d'analyse agencés pour analyser des images numériques acquises par des moyens d'acquisition d'images équipant le véhicule, afin de détecter des zones de stationnement qui sont situées dans l'environnement immédiat du véhicule, puis de déterminer le type de ces zones de stationnement détectées, puis de fournir aux moyens de contrôle des données représentatives de ce type de zone de stationnement déterminé afin qu'ils ne déclenchent l'affichage que d'un type d'entrée et/ou que d'un type de sortie correspondant au type de zone de stationnement déterminé ;
   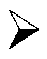 il peut également comprendre certains au moins des moyens d'acquisition.

L'invention propose également un véhicule, éventuellement de type automobile, et comprenant un dispositif d'aide au stationnement du type de celui présenté ci-avant.

D'autres caractéristiques et avantages de l'invention apparaîtront à l'examen de la description détaillée ci-après, et des dessins annexés, sur lesquels:
- la figure 1 illustre schématiquement et fonctionnellement, dans une vue du dessus, un exemple de véhicule automobile équipé d'un exemple de réalisation de dispositif d'aide au stationnement selon l'invention,
- la figure 2 illustre schématiquement un écran sur lequel est affiché un premier exemple d'image de synthèse comprenant deux imagettes représentant respectivement deux entrées dans des zones de stationnement en créneau et en bataille, et
- la figure 3 illustre schématiquement un écran sur lequel est affiché un second exemple d'image de synthèse comprenant deux imagettes représentant respectivement deux sorties de zones de stationnement en créneau et en bataille.

L'invention a notamment pour but de proposer un dispositif D destiné à aider un conducteur pendant les phases de stationnement de son véhicule V.

Dans ce qui suit, on considère, à titre d'exemple non limitatif, que le véhicule V est de type automobile. Il s'agit par exemple d'une voiture, d'un autocar, d'un camion ou d'un véhicule utilitaire. Mais l'invention n'est pas limitée à ce type de véhicule. Elle concerne en effet tout type de véhicule terrestre ou maritime (ou fluvial) pouvant effectuer des déplacements et des manoeuvres sur le sol ou sur l'eau et pouvant être garé dans une zone de stationnement ou sorti d'une zone de stationnement sans intervention du conducteur.

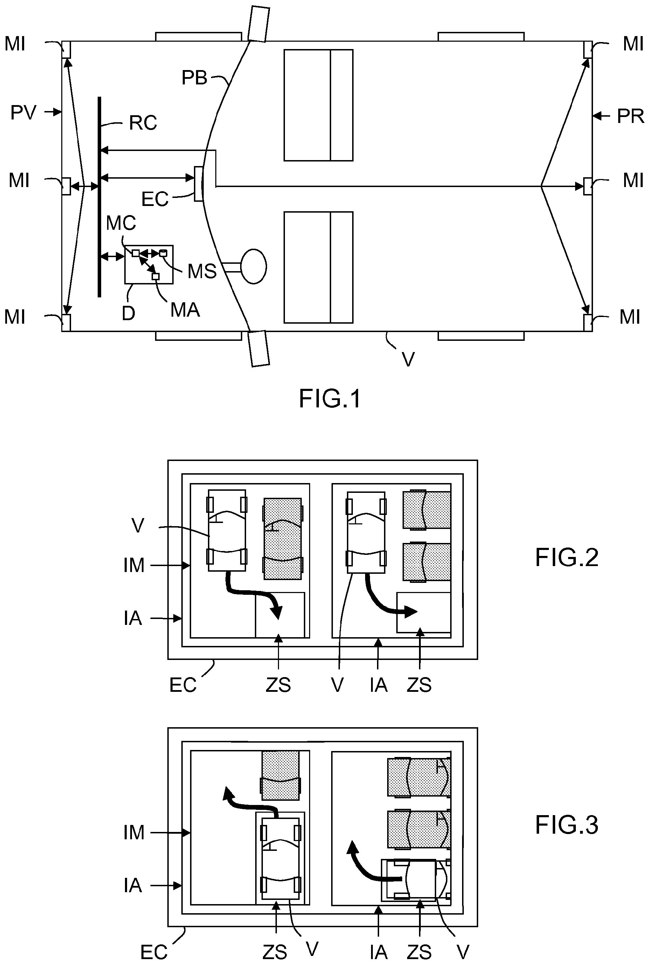

On a schématiquement et fonctionnellement représenté sur la figure 1 un exemple de véhicule automobile V équipé d'un exemple de réalisation d'un dispositif d'aide au stationnement D selon l'invention. On notera que dans cet exemple non limitatif le véhicule automobile V est une voiture comprenant des parties avant PV et arrière PR, et un réseau de communication RC, éventuellement de type multiplexé et permettant à des équipements électroniques embarqués (et notamment l'ordinateur de bord), qui sont connectés à lui, d'échanger des informations et instructions.

Comme illustré, le dispositif d'aide au stationnement D comprend au moins des moyens de contrôle MC.

Dans l'exemple non limitatif illustré sur la figure 1, le dispositif (d'aide au stationnement) D est un équipement indépendant couplé au réseau de communication RC afin de récupérer des données et instructions qui le concernent. Mais cela n'est pas obligatoire. Il pourrait en effet faire partie d'un autre équipement, comme par exemple l'ordinateur de bord ou un calculateur ou encore un système global d'aide à la conduite et aux manoeuvres offrant des fonctions d'aide complémentaires, comme par exemple la détection d'objets susceptibles de constituer des obstacles, la détection de franchissement de ligne, la correction de trajectoire, l'adaptation de la vitesse du véhicule V en fonction de la distance qui le sépare d'un véhicule qui le précède, la fourniture d'images de zones qui sont situées sur les côtés longitudinaux et/ou la partie avant PV et/ou la partie arrière PR du véhicule V, ou l'assistance lors d'une manoeuvre dans un passage délicat. Par conséquent, le dispositif D peut être réalisé sous la forme de modules logiciels (ou informatiques ou encore « software »), ou bien d'une combinaison de circuits électroniques (ou « hardware ») et de modules logiciels.

Le dispositif D intervient lorsqu'une aide au stationnement est requise par le conducteur, par exemple par sélection d'un élément dans un menu ou un sous-menu affichable sur un écran d'affichage EC du véhicule V, comme par exemple le combiné central (implanté en position centrale dans la planche de bord PB), ou par appui sur un bouton dédié, présent dans la planche de bord PB ou la console centrale du véhicule V, ou encore par actionnement d'une manette dédiée ou d'un actionneur dédié faisant partie d'une manette du véhicule V.

Lorsque cette aide est requise, les moyens de contrôle MC sont agencés (ou conçus) pour déclencher un affichage d'une image IA sur un écran EC présent dans le véhicule V. Par exemple, on peut utiliser l'écran d'affichage EC du combiné central précité. Mais, on pourrait également envisager que cet écran d'affichage soit celui d'un équipement de communication mobile (de type smartphone) appartenant au conducteur, disposant d'une application d'aide au stationnement dédiée, et embarqué temporairement dans le véhicule V. Dans ce cas, le dispositif D échange avec cet équipement de communication mobile via un module de communication par voie d'ondes que comprend le véhicule V et qui est couplé au réseau de communication RC.

Cette image IA est représentative :
- (i) soit d'au moins un type d'entrée dans au moins un type de zone de stationnement ZS lorsqu'une vitesse en cours du véhicule V est non nulle et qu'au moins une vitesse du véhicule V enregistrée précédemment est également non nulle,
- (ii) soit d'au moins un type de sortie d'au moins un type de zone de stationnement ZS lorsque la vitesse en cours du véhicule V est nulle et qu'au moins une vitesse du véhicule V enregistrée précédemment est également nulle,
- (iii) soit d'au moins un type d'entrée dans au moins un type de zone de stationnement ZS et d'au moins un type de sortie d'au moins un type de zone de stationnement ZS lorsqu'aucune des conditions qui sont associées aux alternatives (i) et (ii) n'est remplie.

On comprendra que la (première) condition qui est associée à l'alternative (i) est dite remplie lorsque la vitesse en cours du véhicule V et une vitesse du véhicule V enregistrée précédemment sont non nulles, et que la (deuxième) condition qui est associée à l'alternative (ii) est dite remplie lorsque la vitesse en cours du véhicule V et une vitesse du véhicule V enregistrée précédemment sont nulles. Par conséquent, la (troisième) condition qui est associée à l'alternative (iii) est dite remplie lorsque la vitesse en cours du véhicule V est non nulle et qu'une vitesse du véhicule V enregistrée précédemment est nulle, ou lorsque la vitesse en cours du véhicule V est nulle et qu'une vitesse du véhicule V enregistrée précédemment est non nulle.

La première condition est destinée à déterminer les situations de vie (ou phases) dans lesquelles le véhicule V est en mouvement depuis un certain temps et donc ne peut pas être garé (immobile) dans une zone de stationnement ZS. La deuxième condition est destinée à déterminer les situations de vie (ou phases) dans lesquelles le véhicule V est immobile depuis un certain temps et donc est garé dans une zone de stationnement ZS. La troisième condition concerne toutes les autres situations de vie (ou phases) dans lesquelles il y a une incertitude réelle vis-à-vis de la position du véhicule V par rapport à une zone de stationnement ZS, et donc que l'on ne sait pas s'il est garé ou non garé.

On notera que la vitesse en cours du véhicule V est accessible via le réseau de communication RC.

Par exemple, les moyens de contrôle MC peuvent être agencés, dès qu'une portière du véhicule V est fermée, pour comparer la vitesse en cours du véhicule V à une vitesse du véhicule V qui a été enregistrée depuis cette fermeture, et pour enregistrer la plus grande des deux vitesses comparées pour l'utiliser dans les conditions décrites plus haut. La vitesse qui est enregistrée est alors une vitesse qui est maximale depuis la dernière fermeture de portière. Cette comparaison est préférentiellement effectuée aussi bien lorsque la fonction d'aide au stationnement n'a pas été activée par le conducteur que lorsque la fonction d'aide au stationnement a été activée par le conducteur.

L'enregistrement de la plus grande des valeurs (entre la dernière vitesse enregistrée et la vitesse en cours) est un moyen parmi d'autres pour garder en mémoire le fait que la vitesse du véhicule V a été non nulle à un instant donné récent.

L'instant de fermeture est ici l'instant de départ d'une comparaison de vitesses car il est très fréquemment suivi d'un démarrage du véhicule. Mais, d'autres instants caractéristiques peuvent être utilisés, et notamment l'instant d'ouverture d'une portière, ou l'instant de la dernière mise en marche du moteur au moyen de la clé de contact, par exemple. L'objectif est en effet de surveiller la vitesse du véhicule V à partir du moment où il commence à se déplacer.

Le résultat de chaque comparaison de vitesse peut être enregistré dans des moyens de stockage MS qui font de préférence partie du dispositif D comme illustré non limitativement sur la figure 1. Tout type de moyens de stockage connu de l'homme de l'art peut être utilisé, et notamment une mémoire (éventuellement de type logiciel).

On notera que la première condition peut également et éventuellement être remplie lorsqu'en outre la vitesse en cours du véhicule V est inférieure à la vitesse maximale du véhicule V qui est enregistrée dans les moyens de stockage MS.

On notera également que chaque type de sortie peut, de préférence, correspondre à un type de zone de stationnement ZS qui est choisi parmi au moins une zone de stationnement en bataille, une zone de stationnement en créneau, et une zone de stationnement en épi.

Par exemple, les moyens de contrôle MC peuvent être agencés pour déclencher l'affichage sur l'écran EC d'une image de synthèse IA comprenant deux imagettes IM représentant respectivement deux entrées dans des zones de stationnement ZS en créneau et en bataille, lorsque la première condition est remplie. C'est ce cas qui est illustré non limitativement sur la figure 2. Mais dans une variante de réalisation non représentée, les moyens de contrôle MC pourraient être agencés pour déclencher l'affichage sur l'écran EC d'une image de synthèse IA comprenant trois imagettes IM représentant respectivement trois entrées dans des zones de stationnement ZS en créneau, en bataille et en épi, lorsque la première condition est remplie. Le nombre d'imagettes IM affichées dans une phase d'entrée détectée dépend du nombre de types de zone de stationnement ZS pour lesquels le dispositif D est en mesure d'offrir une aide à l'entrée dans une zone de stationnement par un contrôle des manoeuvres sans intervention du conducteur.

De même, chaque type d'entrée peut, de préférence, correspondre à un type de zone de stationnement ZS qui est choisi parmi au moins une zone de stationnement en bataille, une zone de stationnement en créneau, et une zone de stationnement en épi.

Par exemple, les moyens de contrôle MC peuvent être agencés pour déclencher l'affichage sur l'écran EC d'une image de synthèse IA comprenant deux imagettes IM représentant respectivement deux sorties de zones de stationnement ZS en créneau et en bataille, lorsque la deuxième condition est remplie. C'est ce cas qui est illustré non limitativement sur la figure 3. Mais dans des variantes de réalisation non représentées, les moyens de contrôle MC pourraient être agencés pour déclencher l'affichage sur l'écran EC d'une image de synthèse IA comprenant trois imagettes IM représentant respectivement trois sorties de zones de stationnement ZS en créneau, en bataille et en épi, ou bien une seule imagette IM représentant une sortie de zone de stationnement ZS en créneau ou en bataille ou encore en épi, lorsque la deuxième condition est remplie. Le nombre d'imagettes IM affichées dans une phase de sortie détectée dépend du nombre de types de zone de stationnement ZS pour lesquels le dispositif D est en mesure d'offrir une aide à la sortie d'une zone de stationnement par un contrôle des manoeuvres sans intervention du conducteur.

Une fois l'image IA affichée, le conducteur doit sélectionner l'imagette IM qui lui paraît décrire au mieux la situation. Cette sélection peut se faire soit en appuyant sur l'imagette IM (lorsque l'écran EC est de type digital ou sensitif), soit en actionnant un bouton ou une touche placé(e) sous l'imagette IM.

On notera également que le dispositif D peut également et éventuellement comprendre des moyens d'analyse MA agencés pour analyser des images numériques acquises par des moyens d'acquisition d'images MI qui équipent le véhicule V, afin de détecter des zones de stationnement ZS situées dans l'environnement immédiat du véhicule V.

Les moyens d'acquisition d'images MI peuvent, par exemple, comprendre des caméras numériques d'observation solidarisées au véhicule V dans des positions qui leur permettent d'observer une partie au moins de son environnement immédiat, et en particulier les zones qui sont situées sur ses deux côtés longitudinaux. Ils peuvent, par exemple, communiquer au dispositif D les données définissant les images acquises via le réseau de communication RC.

Certains au moins de ces moyens d'acquisition d'images MI peuvent faire éventuellement partie du dispositif D. Mais ce n'est pas obligatoire. En effet, les moyens d'acquisition d'images MI peuvent éventuellement assurer au moins une autre fonction au sein du véhicule V, comme par exemple la détection de personnes ou d'objets dans l'environnement immédiat du véhicule V ou la détection de véhicules en amont et/ou en aval du véhicule V pour un système de régulation de vitesse.

Les moyens d'analyse MA sont également agencés pour déterminer le type des zones de stationnement ZS détectées, puis pour fournir aux moyens de contrôle MC des données représentatives de ce type de zone de stationnement déterminé afin qu'ils ne déclenchent l'affichage que d'un type d'entrée et/ou que d'un type de sortie correspondant au type de zone de stationnement déterminé selon la condition qui est remplie. On comprendra que lorsque les moyens d'analyse MA ne réussissent pas à détecter de zone de stationnement ZS autour du véhicule V ou à déterminer le type des zones de stationnement ZS détectées, les moyens de contrôle MC déclenchent l'affichage d'au moins un type d'entrée et/ou d'au moins un type de sortie selon la condition qui est remplie.

L'invention permet de simplifier notablement, dans la plupart des cas, la phase de sélection que doit effectuer le conducteur une fois qu'il a activé la fonction d'aide au stationnement, ce qui permet de réduire notablement la probabilité qu'il se trompe.

## Revendications

1. Dispositif d'aide au stationnement (D) pour un conducteur d'un véhicule (V), **caractérisé en ce qu'**il comprend des moyens de contrôle (MC) agencés, lorsqu'une aide au stationnement est requise par ledit conducteur, pour déclencher un affichage sur un écran (EC) présent dans ledit véhicule (V) d'une image représentative (i) soit d'au moins un type d'entrée dans au moins un type de zone de stationnement (ZS) lorsqu'une vitesse en cours dudit véhicule (V) et au moins une vitesse dudit véhicule (V) enregistrée précédemment sont non nulles, (ii) soit d'au moins un type de sortie d'au moins un type de zone de stationnement (ZS) lorsque ladite vitesse en cours du véhicule (V) et au moins une vitesse dudit véhicule (V) enregistrée précédemment sont nulles, (iii) soit d'au moins un type d'entrée dans au moins un type de zone de stationnement (ZS) et d'au moins un type de sortie d'au moins un type de zone de stationnement (ZS) lorsqu'aucune des conditions associées aux alternatives (i) et (ii) n'est remplie.

2. Dispositif selon la revendication 1, **caractérisé en ce que** lesdits moyens de contrôle (MC) sont agencés, dès qu'une portière dudit véhicule (V) est fermée, pour comparer ladite vitesse en cours du véhicule (V) à une vitesse dudit véhicule (V) enregistrée depuis cette fermeture, et pour enregistrer la plus grande des deux vitesses comparées pour l'utiliser dans lesdites conditions.

3. Dispositif selon l'une des revendications 1 et 2, **caractérisé en ce que** chaque type de sortie correspond à un type de zone de stationnement (ZS) choisi dans un groupe comprenant une zone de stationnement en bataille, une zone de stationnement en créneau, et une zone de stationnement en épi.

4. Dispositif selon l'une des revendications 1 à 3, **caractérisé en ce que** chaque type d'entrée correspond à un type de zone de stationnement (ZS) choisi dans un groupe comprenant une zone de stationnement en bataille, une zone de stationnement en créneau, et une zone de stationnement en épi.

5. Dispositif selon l'une des revendications 1 à 4, **caractérisé en ce qu'**il comprend des moyens d'analyse (MA) agencés pour analyser des images numériques acquises par des moyens d'acquisition d'images (MI) équipant ledit véhicule (V), afin de détecter des zones de stationnement (ZS) situées dans l'environnement immédiat dudit véhicule (V), puis de déterminer le type de ces zones de stationnement (ZS) détectées, puis de fournir auxdits moyens de contrôle (MC) des données représentatives de ce type de zone de stationnement déterminé afin qu'ils ne déclenchent l'affichage que d'un type d'entrée et/ou que d'un type de sortie correspondant audit type de zone de stationnement déterminé.

6. Dispositif selon la revendication 5, **caractérisé en ce qu'**il comprend certains au moins desdits moyens d'acquisition (MI).

7. Véhicule (V), **caractérisé en ce qu'**il comprend un dispositif d'aide au stationnement (D) selon l'une des revendications précédentes.

8. Véhicule selon la revendication 7, **caractérisé en ce qu'**il est de type automobile.

## Patentansprüche

1. Parkhilfesystemvorrichtung (D) für einen Führer eines Fahrzeugs (V), **dadurch gekennzeichnet, dass** sie Steuermittel (MC) umfasst, die eingerichtet sind, um, wenn eine Parkhilfe von dem Führer angefordert wird, eine Anzeige auf einem Bildschirm (EC), der in dem Fahrzeug (V) gegenwärtig ist, eines repräsentativen Bilds (i) entweder mindestens eines Einfahrttyps in mindestens einen Parkzonentyp (ZS), wenn die aktuelle Geschwindigkeit des Fahrzeugs (V) und mindestens eine Geschwindigkeit des Fahrzeugs (V), die zuvor registriert wurde, nicht gleich null sind, (ii) oder mindestens eines Ausfahrttyps aus mindestens einem Parkzonentyp (ZS), wenn die aktuelle Geschwindigkeit des Fahrzeugs (V) und mindestens eine Geschwindigkeit des Fahrzeugs (V), die zuvor registriert wurde, null sind, (iii) oder mindestens eines Einfahrttyps in mindestens einen Parkzonentyp (ZS) und mindestens einen Ausfahrttyp aus mindestens einem Parkzonentyp (ZS) auszulösen, wenn keine der Bedingungen, die mit den Alternativen (i) und (ii) assoziiert sind, erfüllt ist.

2. Vorrichtung nach Anspruch 1, **dadurch gekennzeichnet, dass** die Steuermittel (MC) eingerichtet sind, um, sobald eine Tür des Fahrzeugs (V) geschlossen wird, die aktuelle Geschwindigkeit des Fahrzeugs (V) mit einer Geschwindigkeit des Fahrzeugs (V), die seit dem Schließen registriert wurde, zu vergleichen, und um die größere der zwei verglichenen Geschwindigkeiten zu registrieren, um sie in den Bedingungen zu verwenden.

3. Vorrichtung nach einem der Ansprüche 1 und 2, **dadurch gekennzeichnet, dass** jeder Ausfahrttyp einem Parkzonentyp (ZS) entspricht, der aus einer Gruppe ausgewählt ist, die eine Quereinparkzone, eine Rückwärtseinparkzone und eine Fischgräteinparkzone umfasst.

4. Vorrichtung nach einem der Ansprüche 1 bis 3, **dadurch gekennzeichnet, dass** jeder Einfahrttyp einem Parkzonentyp (ZS) entspricht, der aus einer Gruppe ausgewählt ist, die eine Quereinparkzone, eine Rückwärtseinparkzone und eine Fischgräteinparkzone umfasst.

5. Vorrichtung nach einem der Ansprüche 1 bis 4, **dadurch gekennzeichnet, dass** sie Analysemittel (MA) umfasst, die eingerichtet sind, um digitale Bilder zu analysieren, die von Bilderfassungsmitteln (MI), die das Fahrzeug (V) ausstatten, erkannt werden, um Parkzonen (ZS) zu erkennen, die in einer unmittelbaren Umgebung des Fahrzeugs (V) liegen, dann den Typ dieser erkannten Parkzonen (ZS) zu bestimmen, dann den Steuermitteln (MC) Daten zu liefern, die für diesen bestimmten Parkzonentyp repräsentativ sind, damit sie das Anzeigen, nur eines Einfahrttyps und/oder nur eines Ausfahrttyps, der dem bestimmten Parkzonentyp entspricht, auslösen.

6. Vorrichtung nach Anspruch 5, **dadurch gekennzeichnet, dass** sie mindestens bestimmte der Erfassungsmittel (MI) umfasst.

7. Fahrzeug (V), **dadurch gekennzeichnet, dass** es eine Parkhilfesystemvorrichtung (D) nach einem der vorhergehenden Ansprüche umfasst.

8. Fahrzeug nach Anspruch 7, **dadurch gekennzeichnet, dass** es vom Typ Kraftfahrzeug ist.

## Claims

1. A parking assistance device (D) for a driver of a vehicle (V), **characterized in that** it includes monitoring means (MC) arranged, when parking assistance is required by said driver, to trigger a display on a screen (EC) present in said vehicle (V) of an image that is representative (i) either of at least one type of entry into at least one type of parking zone (ZS) when a current speed of said vehicle (V) and at least one previously recorded speed of said vehicle (V) are not zero, (ii) or of at least one type of exit from at least one type of parking zone (ZS) when said current speed of the vehicle (V) and at least one previously recorded speed of said vehicle (V) are zero, (iii) or of at least one type of entry into at least one type of parking zone (ZS) and of at least one type of exit from at least one type of parking zone (ZS) when none of the conditions associated with the alternatives (i) and (ii) is fulfilled.

2. The device according to Claim 1, **characterized in that** said monitoring means (MC) are arranged, as soon as a door of said vehicle (V) is closed, to compare said current speed of the vehicle (V) to a speed of said vehicle (V) recorded since this closure, and to record the greater of the two compared speeds to use it in said conditions.

3. The device according to one of Claims 1 and 2, **characterized in that** each type of exit corresponds to a type of parking zone (ZS) selected from a group including a perpendicular parking zone, a parallel parking zone, and an angled parking zone.

4. The device according to one of Claims 1 to 3, **characterized in that** each type of entry corresponds to a type of parking zone (ZS) selected from a group including a perpendicular parking zone, a parallel parking zone, and an angled parking zone.

5. The device according to one of Claims 1 to 4, **characterized in that** it includes analysis means (MA) arranged to analyse digital images acquired by image acquisition means (MI) equipping said vehicle (V), so as to detect parking zones (ZS) situated in the immediate environment of said vehicle (V), then to detect the type of these detected parking zones (ZS), then to supply said monitoring means (MC) with data representative of this type of determined parking zone so that they only trigger the display of a type of entry and/or a type of exit corresponding to said determined type of parking zone.

6. The device according to Claim 5, **characterized in that** it includes some at least of said acquisition means (MI) .

7. A vehicle (V), **characterized in that** it includes a parking assistance device (D) according to one of the preceding claims.

8. The vehicle according to Claim 7, **characterized in that** it is of motor vehicle type.
